# EUROPEAN PATENT SPECIFICATION

(11) **EP 2 791 220 B1**
(45) Date of publication and mention of the grant of the patent: **30.05.2018**
(21) Application number: 12799562.9
(22) Date of filing: 11.12.2012
(51) Int. Cl.: C08J 5/04, C08J 9/42, C08J 5/24, D06M 15/693

(54) **IMPROVED COMPOSITE MATERIALS**
VERBESSERTE VERBUNDWERKSTOFFE
MATÉRIAUX COMPOSITES AMÉLIORÉS

(30) Priority: 12.12.2011 GB 201121304
(43) Date of publication of application: 22.10.2014
(73) Proprietor: Hexcel Composites Limited, Duxford Cambridgeshire CB22 4QB (GB)
(72) Inventor: HADLEY, Philip, Ely Cambridgeshire CB6 3WL (GB)
(74) Representative: Pols, Ronald Maarten
(86) International application number: PCT/EP2012/075134
(87) International publication number: WO 2013/087653

(56) References cited:
- EP-A1- 0 522 777
- EP-A1- 0 723 994
- EP-A1- 1 072 634
- EP-A2- 0 159 482
- EP-A2- 0 295 375
- EP-A2- 0 296 112
- GB-A- 1 177 483
- US-A- 3 255 030
- US-A- 4 213 930
- US-A- 5 438 104
- US-A- 5 512 351
- US-A- 5 891 292
- US-A- 5 932 635
- US-A- 6 117 551
- US-A1- 2008 032 094
- US-B1- 6 429 157
- DATABASE WPI Week 199822 Thomson Scientific, London, GB; AN 1998-245678 XP002692164, & JP 10 077392 A (HITACHI CHEM CO LTD) 24 March 1998 (1998-03-24)
- DATABASE WPI Week 201165 Thomson Scientific, London, GB; AN 2011-M20359 XP002692165, & JP 2011 190430 A (MITSUBISHI RAYON CO LTD) 29 September 2011 (2011-09-29)
- DATABASE WPI Week 201007 Thomson Scientific, London, GB; AN 2009-S71295 XP002692166, & WO 2009/153991 A1 (FUJI ENTERPRISE CO LTD) 23 December 2009 (2009-12-23)
- DUBOIS O., LE CAM J.-B., BÉAKOU A.: "Experimental Analysis of Prepreg Tack", EXPERIMENTAL MECHANICS, vol. 50, 6 March 2009 (2009-03-06), pages 599-606, XP002692167,

## Description

### Technical field

The invention relates to a tack sheet comprising a porous sheet material impregnated with a polymeric material.

### Background

Composite materials have well-documented advantages over traditional construction materials, particularly in providing excellent mechanical properties at very low material densities. As a result, the use of such materials is becoming increasingly widespread and their application ranges from "industrial" and "sports and leisure" to high performance aerospace components.

Prepreg is the term used to describe fibres and fabric impregnated with a resin in the uncured state and ready for curing. The fibres may be in the form of tows or fabrics and a tow generally comprise a plurality of thin filaments. The fibrous materials and resins employed in the prepregs will depend upon the properties required of the cured fibre reinforced material and also the use to which the cured laminate is to be put. The fibrous material is described herein as structural fibre.

Various methods have been proposed for the production of prepregs, one of the preferred methods being the impregnation of a moving fibrous web with a liquid, molten or semi-solid uncured thermosetting resin. The prepreg produced by this method may then be cut into sections of the desired length and a stack of the sections cured by heating to produce the final fibre reinforced laminate. Curing may be performed in an autoclave or vacuum bag at an increased temperature. Prior to cure of the prepreg, the resin impregnates the fibrous reinforcement, typically in the range of from 20 to 50% by volume, preferably from 32 to 38%.

Typically a number of plies of such prepregs are "laid-up" as desired and the resulting assembly, or laminate, is cured, typically by exposure to elevated temperatures, to produce a cured composite laminate.

A particular type of prepreg is the so-called semipreg, which involves the fibre arrangement being only partly impregnated with resin, leaving a portion of the fibre arrangement in a "dry" state.

When such prepregs or semipregs are laid down, the resin, when present on an outer surface, provides a level of tack which helps to keep the prepreg or semipreg in place. This tack level is primarily governed by the properties of the matrix resin, and the relative quantities of resin and fibre.

However, curable resin systems such as epoxies present usuable tack over only a narrow temperature range. This range typically limits the application of these systems to temperatures in the ambient range (approximately 15 to 25 °C).

Furthermore, once prepared, such matrix resins begin to age and the degree of tackiness they provide reduces noticeably over time due to aging.

Thus, the degree of tackiness can be highly unpredictable depending primarily on the age of the prepreg and the temperature during lay-up.

EP 1 072 634 discloses a sheet structure comprising a core sheet of a first curable resinous material and an outer layer of a second curable resinous material, said outer layer being capable of, blending with the resin in the core material, said outer sheet having tack-stability of at least 5 days at 23 °C. This sheet structure has stable tack at room temperature (23 °C), but this still limits the temperature range over which the material may be applied to a mould. Also, aging over longer time periods still affect the tack of this material.

Thus, improvements in this area would be highly desirable. The present inventions aim to obviate and/or mitigate the above described problems and/or to provide improvements generally.

### Summary of the Invention

According to the invention there is provided a structure or laminate, a tack material and a use of a tack material as defined in any of the accompanying claims.

There is therefore provided a structure or laminate comprising a fibrous reinforcement material and a reinforcement resin material wherein the structure or laminate further comprises a tack material on an outer face, the tack material increasing the surface tack of the structure or laminate over a tack temperature range of from -10°C to 10°C in comparison to the original surface tack of the structure or laminate in the absence of the tack material over the same tack temperature range; and further wherein the tack material comprises a porous sheet material at least partially impregnated with a polymer material having a glass transition temperature of less than 0°C.

There is also provided the use of a tack material to increase the surface tack of a structure or laminate comprising
a) providing a structure or laminate comprising a fibrous reinforcement material and a reinforcement resin material,
b) selecting a tack material, and applying said tack material to the structure or laminate to increase the surface tack of the structure or laminate over a wider tack temperature range than the tack temperature range of the structure or laminate in the absence of the tack material; wherein the tack material comprises a porous sheet material at least partially impregnated with a polymer material having a glass transition temperature of less than 0°C.

There is further provided a tack sheet or tack material for increasing the surface tack of a structure or laminate over a wider tack temperature range than the tack temperature range of the structure or laminate in the absence of the tack material, wherein the tack material or tack sheet comprises a porous sheet material at least partially impregnated with a polymer material having a glass transition temperature of less than 0°C.

There is further provided the use of a tack sheet or tack material according to the invention to increase the surface tack of a prepreg comprising a structural layer of fibres and a thermosetting curable resin.

The tack material has been found to increase the surface tack of the structure or laminate over a tack temperature of from -10°C to 10°C in comparison to the original surface tack of the structure or laminate in the absence of the tack material at the same temperature.

The tack material has been found to increase the tack or adhesion. This leads to an improved tack of the structure or laminate over a wider temperature envelope and an increased outlife. This is particularly useful when working with prepregs having a reduced resin content.

In a preferred system the adhesion of the tack material is preferably in the range of 0.1 to 0.2 when measured according to the Dubois test described below, whilst the adhesion of the prepreg itself is lower than this range. Additionally, it is preferred that the adhesion between the structure or laminate layers in the mould, autoclave or vacuum bag prior to curing of the resin is in the range of 0.1 to 0.45.

In the structures or laminates of the invention the surface tack preferably remains within 25% of the original surface tack following aging of the structure or laminate over a period of from 5 to 30 days.

In structures or laminates according to the invention, preferably the increased tack is present over temperatures ranging from -10 to 30°C, preferably from -10 to 50 °C.

In structures or laminates according to the invention, preferably the reinforcement resin material and the tack material are phase separated during processing.

The invention is applicable to any composite structure or laminate comprising fibrous reinforcement and a resin, the fibrous reinforcement comprising unidirectional, bidirectional or multidirectional fibres which may be glass, aramid or carbon fibre. The invention is particularly useful with prepregs comprising a layer of fibrous reinforcement and a curable liquid resin wherein the fibrous reinforcement comprises a plurality of tows, particularly parallel tows, each tow comprising a plurality of filaments wherein resin is provided at least partially between interstices between tows of the fibrous reinforcement to provide an air venting path in at least the interior of the tows. In a preferred embodiment the interior of the tows is at least partially resin free to provide an air venting path to allow air to be removed during processing of the material or structure.

The intersticial resin ensures that the material when provided with the backing sheet has adequate structure at room temperature to allow handling of the material. This is achieved because at room temperature (23°C), the resin has a relatively high viscosity, typically in the range of from 1000 to 100,000 Pa.s, more typically in the range of from 5000 Pa.s to 500,000 Pa.s.

Tack is a measure of the adhesion of the structure or laminate to a tool surface and/or to other structural plies or laminates in an assembly. Tack may be measured in relation to the resin itself or in relation to the prepreg in accordance with the method as disclosed in "Experimental analysis of prepreg tack", Dubois etal, (LaMI)UBP/IFMA, 5 March 2009.

Tack measurement was performed using the probe tack test as disclosed in the above Dubois etal. paper. For that purpose, a 1 kN Instron 5543 universal testing machine (Norwood, MA, USA) was used. The upper grip of the machine was replaced by an aluminium cylindrical probe of 10 mm diameter mounted on the moving crosshead of the machine, via a 50 N capacity load cell. The probe can be heated with a flexible heater. A PT100 temperature sensor linked to a Proportional-Integral-Derivative (PID) temperature controller regulates the temperature. Test samples were applied on the lower support. The probe, which was surrounded by a heater, was set at a given temperature, and then the probe was brought into contact with the sample, and the maximum reading of the load cell was recorded for each test.

The test procedure used for the tack measurement is described hereafter:
1. Test strips of prepreg or tack material or structure or laminate were cut to meet the probe. Samples were then put in a climatic chamber for a given time at controlled temperature and Relative Humidity.
2. Before each run, the contact surface of the probe and the support were cleaned with acetone.
3. Contact time, contact force and debonding rate were set for the mechanical cycle.
4. The temperature of the probe was set by regulator.
5. Once the temperature of the probe reached the set point and was equilibrated, the sample was removed from the climatic chamber and was positioned on the support. It should be noted that the side of the sample protected by a release paper, i.e. the tackiest side, was applied without pressure on the lower grip. The release paper was then removed.
6. The value given by the load cell was reset and the test started. Time, force and crosshead displacement were then measured.

The Dubois etal method allows tack to be measured objectively and repeatably by using the equipment as described therein and by measuring the maximum debonding force for a probe which is brought in contact with the sample structure at an initial pressure of 30N at a constant temperature of 30 °C and which is subsequently displaced at a rate of 5 mm/min. For these probe contact parameters, the tack F/Fref for the tack material is in the range of from 0.1 to 0.6 at room temperature (21 °C) where Fref = 28.19N and F is the maximum debonding force. For a conventional structure such as a conventional prepreg, the tack F/Fref is in the range of from 0.1 to 0.45 for F/Fref where Fref = 28.19N and F is the maximum debonding force at room temperature. However, a fibrous support web, grid or scrim may also be located on at least one exterior surface of the fibrous reinforcement to further enhance the integrity of the material or structure during handling, storage and processing.

The structure or laminate may be in the form of a moulding material such as a prepreg.

The inventors have discovered that a sheet material impregnated with a polymer material having a low glass transition temperature can be added to an outer surface of a prepreg or semipreg to provide greater control of the tack level.

Another advantage of such a sheet is that it provides tack only at the surface of the prepreg, where it is needed. This can allow the matrix resin in the prepreg to be formulated without needing to consider tack, allowing a formulator greater freedom to achieve other requirements of the prepreg.

The porous sheet material is an integral sheet and preferably is constructed from overlapping and/or interconnecting fibres. Such fibres may be woven, knitted or random (e.g. spunlaced or laid scrim) for example.

The porous sheet may be characterised by the degree of openness of the sheet, i.e. the percentage of the average surface area of the sheet which is made up of open holes in the sheet. The porous sheet of the present invention typically has a degree of openness of from 10 to 90%, preferably from 30 to 80%. This helps to maintain a lightweight sheet and also allows the free passage of resin.

It should be noted that, throughout this specification, in specifying any range of concentration or amount, any particular upper concentration can be associated with any particular lower concentration or amount.

The material of the porous sheet may be selected from a wide range of materials, but preferably comprises a polymeric material, typically a synthetic polymer material, such as nylon, polyethylene terephtalate, polyester and the like.

As the sheet is intended to be added to a structure or laminate which may be in the form of a moulding material such as a prepreg or semipreg it is desirable if it is lightweight, particularly in aerospace applications where weight is of paramount importance. Thus, preferably the porous sheet (in unimpregnated form) has a weight per unit area of from 1 to 50 grams per square meter (or gsm), more preferably from 2 to 30 gsm, more preferably from 3 to 15 gsm, more preferably from 4 to 10 gsm.

It is also desirable that the porous sheet can melt during curing of the prepreg or semipreg, this preferably the porous sheet loses its solid nature above 120°C, more preferably above 100°C. This enables the sheet to "cure-in" and become an integral part of any cured composite.

The polymer material or polymeric material or tack material which impregnates the porous sheet provides a tack level which is insensitive to the age of the material or to the temperature of lay-up. The polymer material is therefore typically viscoelastic at 20°C.

It is preferable if the polymer material has a lower glass transition temperature, as this makes the tack level even less sensitive to the temperature of lay-up. Thus preferably the polymer material has a glass transition temperature of less than -20°C, more preferably less than -40°C.

Additionally, the polymer material preferably has a damping coefficient (tan δ) peak in the range of from -60°C to 100°C, preferably from 30°C to 50°C as measured in accordance with ASTM D5279. The polymer material may also have a loss modulus peak (E") as measured in accordance with ASTM D5279 extending over a temperature range of at least 30°C, preferably over a range of at least 60°C.

The glass transition temperature is measured by differential scanning calorimetry (DSC), with the sample cooled at 10K/min followed by heating at 10K/min in accordance with ASTM D5685.

As only a surface tack level is required, it is preferable that the polymer material is present in low levels. Thus the polymer material is preferably present in a quantity of from 1 to 50 grams per square meter (gsm), more preferably from 2 to 30 gsm, more preferably from 3 to 15 gsm, more preferably from 4 to 10 gsm.

Thus, depending on the relative quantities of porous sheet and polymer material, the porous sheet can be impregnated to varying degrees. For example the sheet may only be partially impregnated, fully impregnated, or fully impregnated with an excess of polymer material on at least one side of the sheet.

For some applications it may be desirable that the porous sheet is only just impregnated with a minimal quantity of polymer material available on the surface of the tack sheet. This allows the tack sheet to provide tack but also to be removable. This may be particularly advantageous if it is attached to a prepreg, as it may allow repositioning of the prepreg after lay-up if it is laid down incorrectly.

It is also possible that when the tack sheet is only just fully impregnated then one side of the tack sheet will comprise some polymer material whereas the other side remains dry and non-tacky. Such a sheet is capable of providing differing levels of tackiness between its two faces, which may be advantageous for certain applications. For example, it may be desirable to attach the non-tacky side to a prepreg, leaving its tacky side facing outwards.

Thus the tack sheet preferably has a weight per unit area of from 2 to 50 grams per square meter (gsm), more preferably from 4 to 30 gsm, more preferably from 5 to 15 gsm.

The polymer material may comprise any of a wide variety of materials. These materials may comprise a rubber, a natural rubber, particularly a rubber comprising a butyl rubber, or a chlorobutyl rubber, or an isoprene rubber, or a chloroprene rubber, or a butadiene rubber, or a styrene rubber, or an (acrylo)nitrile rubber and/or combinations of the aforesaid rubbers. It is preferable that the polymer material comprises an uncured natural and/or a synthetic rubber, as it provides a particularly desirable type of tack. In a preferred embodiment, the rubber comprises a nitrile rubber.

The polymer material may be dissolved in a solvent. The solvent may be an aromatic solvent such as toluene or an alkyl ketone solvent such as methyl ethyl ketone (MEK). The polymer or tack material may comprise the following properties: a glass transition temperature (T_{g}) of from -100 to 100 °C, preferably from -80 °C to 0 °C; a tan δ peak in the range of from -60 °C to 100 °C, preferably from -30 °C to 50 °C; and a loss modulus peak (E") extending over a temperature range of at least 30 °C, preferably over a range of at least 60 °C.

In contrast, the strucutural material or laminate, when cured, may be characterized as a material having the following properties: a T_{g} of from 100 °C to 300 °C, a tan δ peak in the range of from 100 °C to 400 °C, preferably from 150 °C to 300 °C; and a loss modulus peak (E") extending over a temperature range of less than 30 °C.

We have discovered that the tack material also displays vibration and sound attenuation properties when positioned in an assembly of multiple fiber and resin composite layers.

It is highly desirable that the polymer material be soluble in any resin matrix material of a prepreg it is to be attached to. Thus, the polymer material may comprise resinous or thermoplastic components.

Additional materials could be included in the polymer material to enable further management of tack. For example the addition of low density powder such as fumed silica (e.g. Cab-O-Sil (TM)), could be preferred. This could also change the rheology characteristics of the casting solution and enhance the processability of the polymer material.

The tack sheet may be made in a variety of ways, typically involving the impregnation of the porous sheet with a liquid form of the polymer material. In one preferred process the polymer material is carried in a solvent and is impregnated into the porous sheet while in liquid form. This is followed by evaporation of the solvent to leave behind the polymer material.

As discussed above, the primarily purpose of the tack sheet is to act as a tack layer for a prepreg.

Thus, in a further embodiment, the invention also relates to a prepreg comprising a structural layer of fibres and thermosetting curable resin and having a tack material or tack sheet as described herein on an outer face.

The structural fibres may comprise cracked (i.e. stretch-broken), selectively discontinuous or continuous fibres.

The structural fibres may be made from a wide variety of materials such as glass, carbon, graphite, metallised polymers aramid and mixtures thereof. The composite material typically comprises from 30 to 70 wt % structural fibres.

As discussed above, the prepreg of the present invention comprise a curable thermosetting resin. The curable resin may be present as a discrete layer or may be fully or partially impregnated into a layer of structural fibres. The prepreg typically comprises from 15 to 50 wt % curable resin.

The curable resin may be selected from those conventionally known in the art, such as resins of phenol-formaldehyde, urea-formaldehyde, 1,3,5-triazine-2,4,6-triamine (melamine), bismaleimide, epoxy resins, vinyl ester resins, benzoxazine resins, polyesters, unsaturated polyesters, cyanate ester resins, or mixtures thereof.

Particularly preferred are epoxy resins, for example monofunctional, difunctional or trifunctional or tetrafunctional epoxy resins.

The epoxy resin may comprise monofunctional, difunctional, trifunctional and/or tetrafunctional epoxy resins.

Suitable difunctional epoxy resins, by way of example, include those based on; diglycidyl ether of Bisphenol F, Bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, or any combination thereof.

Difunctional epoxy resins may be preferably selected from diglycidyl ether of Bisphenol F, diglycidyl ether of Bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl ethers, epoxidised olefins, brominated resins, triglycidyl aminophenyls, aromatic glycidyl amines, heterocyclic glycidyl imidines and amides, glycidyl ethers, fluorinated epoxy resins, or any combination thereof.

Suitable tetrafunctional epoxy resins include N,N,N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY721 from Huntsman Advanced Materials).

The thermosetting resin may also comprise one or more curing agent. Suitable curing agents include anhydrides, particularly poly carboxylic anhydrides; amines, particularly aromatic amines e.g. 1,3-diaminobenzene, 4,4'-diaminodiphenylmethane, and particularly the sulphones, e.g. 4,4'-diaminodiphenyl sulphone (4,4' DDS), and 3,3'-diaminodiphenyl sulphone (3,3' DDS), and the phenol-formaldehyde resins. Preferred curing agents are the amino sulphones, particularly 4,4' DDS and 3,3' DDS.

Further examples of the type and design of the resin and fibres can be found in WO 2008/056123.

The structures or laminates of the present invention may include additional materials as desired, such as performance enhancers or modifying agents. Such materials may be selected from flexibilisers, toughening agents/particles, additional accelerators, core shell rubbers, flame retardants, melting agents, pigments/dyes, plasticisers, UV absorbers, anti-fungal components, fillers, viscosity modifiers/flow control agents, stabilisers and inhibitors.

The tack sheet or tack material according to the invention can be applied to a prepreg on a filmic carrier. Alternatively the tack sheet could be tacked to the surface of the structure using spots of resin either originating from, or added to, the prepreg.

As discussed above, the structures or laminates according to the invention are intended to be laid up with other prepregs, to form a prepreg stack.

Typically a plurality of the structures or laminates in the stack are according to the present invention. In a preferred embodiment at least half of the structures or laminates are according to the present invention. It may even be desirable for at least 75% of the structures or laminates to be according to the invention or even substantially all of the structures or laminates.

Once formed such a prepreg stack is typically cured by exposure to elevated temperature and optionally elevated pressure, to produce a cured composite material.

In a preferred process the polymer material cures together with the thermosetting resin of the prepreg.

The invention will now be illustrated by reference to the following non-limiting examples and accompanying Figures in which
Figure 1 presents the relation between tack and temperature for two structures according to an embodiment of the invention, and;
Figure 2 presents the relation between tack and aging for two structures according to another embodiment of the invention.

### Examples

### Example 1 - preparation of tack material

A rubber compound from Berwin Polymer Processing (E11516 NR Trial Black) was applied by hand from dilute toluene solution onto a 4 gsm polyester fabric (Technical Fibre Products, UK). The rubber loading on the veil was adjusted by varying the concentration of rubber in solution. The table below shows the properties of the rubber-modified fabrics. The data represent the average weight of two films made by hand. The polyester veil adds another 4 gsm to the areal weights. Slight differences in casting process are manifested in the higher areal weight of rubber resulting from the 7.5% example than for the 10.0% example.

**Table 1**

| | | | | |
|---|---|---|---|---|
| **Concentration of rubber in toluene** | 2.5% | 5% | 7.5% | 10.0% |
| **Areal weight resulting (gsm)** | 1.8 | 3.0 | 7.8 | 6.6 |

For the lower levels of rubber the surface of the fabric retains the fabric structure, slightly rough and dry to touch. The lower surface, which was in contact with a release paper to aid removal after casting, forms a glossy layer of rubber with a 'grippy' aspect. The fabric is easily removed from the release medium and can be isolated as an intermediate. The rubber solution has clearly flowed preferentially to the lower side of the fabric.

The upper side of the fabric with its retained fibrous quality presents a useful surface with which to carry out further processes, adding a further layer of material to give a biased element, or used to attach to a resinous substrate, for example.

The rubberized fabric is then applied onto prepreg, dry side down, to produce a layer which is tackier than the surrounding prepreg. Gentle heating and pressure aids the adhesion of the rubber element to the prepreg surface. The rubber face has the ability to tack to a surface and be removed and replaced.

### Example 2 - prepregs with tack material

A prepreg, containing a woven polyester fibrous reinforcement material of 620 gsm and M9.7G resin was modified by the addition of rubber tack modification elements using the veils described above. Seven plies of the prepreg were assembled and cured in a laminate structure. The cure cycle was typical for this wind energy prepreg: 1°C/min to 80°C, dwell for 2 h, then 1°C/min to 120°C, dwell for 1 h, then cool down. There was little to differentiate the specimens from a control by simple inspection.

Sections of the laminates were tested using dynamic mechanical analysis (DMA) using a Perkin Elmer DMA 8000 to assess the effect of adding the rubber layers on the thermo-mechanical performance of the parts (ASTM D5279). One specimen was tested from each laminate. The results are set out in Table 2 below.

**Table 2**

| **Laminate specimen** | **Thickness (mm)** | **E' modulus onset T_{g} (°C)** | **Tan δ peak (°C)** |
|---|---|---|---|
| M9.7G based prepreg | 3.2 | 123.0 | 138.0 |
| M9.7G prepreg + 8 gsm rubber on fabric | 3.4 | 121.7 | 131.4 |
| M9.7G prepeg + 3.0 gsm rubber on fabric | 3.4 | 122.1 | 131.2 |
| M9.7G pregreg +6.6 gsm rubber on veil | 3.4 | 120.8 | 130.9 |
| M9.7G prepreg +7.8 gsm rubber on veil | 3.4 | 120.7 | 129.9 |

Despite the highly useful changes that these rubber layers impart to uncured prepreg in modifying their tack characteristics, it is surprising that they do not significantly affect the thermo-mechanical performance of the laminate.

### Example 3 - preparation of tack material

A tack material (tack material A) was prepared by dissolving a rubber compound from Berwin Polymer Processing (E11516 NR Trial Black) in a dilute toluene solution (25% toluene) onto a 4 gsm polyester fabric (Technical Fibre Products, UK). The rubber loading on the veil was adjusted by varying the concentration of rubber in solution to result in an overall rubber weight for the tack material of 7.78 g/m² (gsm).

A variant of the above tack material (tack material B) was prepared in the same way as tack material A but by further adding 25% by weight of a phenoxy powder (Paphen™ PKHP-200) to the toluene solution.

A further variant of the tack material (tack material C) was prepared in the same way as tack material A, but by including a woven phenoxy (Paphen™ PKHP-200) based grid having a weight of 0.017 g/m².

### Example 4 - prepregs including tack materials A, B and C

Seven Plies of a prepreg, containing a woven polyester fibrous reinforcement material of 620 gsm and M9.7G resin was used as the starting point for measuring ILSS (interlaminar shear strength) in accordance with Standard EN2563:1997.

Variants of this material were made by applying a layer of tack material A, B and C on top of the prepreg. The results are presented in Table 3.

**Table 3**

| **Laminate specimen** | **Thickness (mm)** | **ILSS (MPa)** |
|---|---|---|
| M9.7G based prepreg | 3.0 | 55.0 |
| M9.7G prepreg + tack material A | 3.1 | 40.8 |
| M9.7G prepeg + tack material B | 3.2 | 52.2 |
| M9.7G pregreg + tack material C | 3.2 | 49.1 |

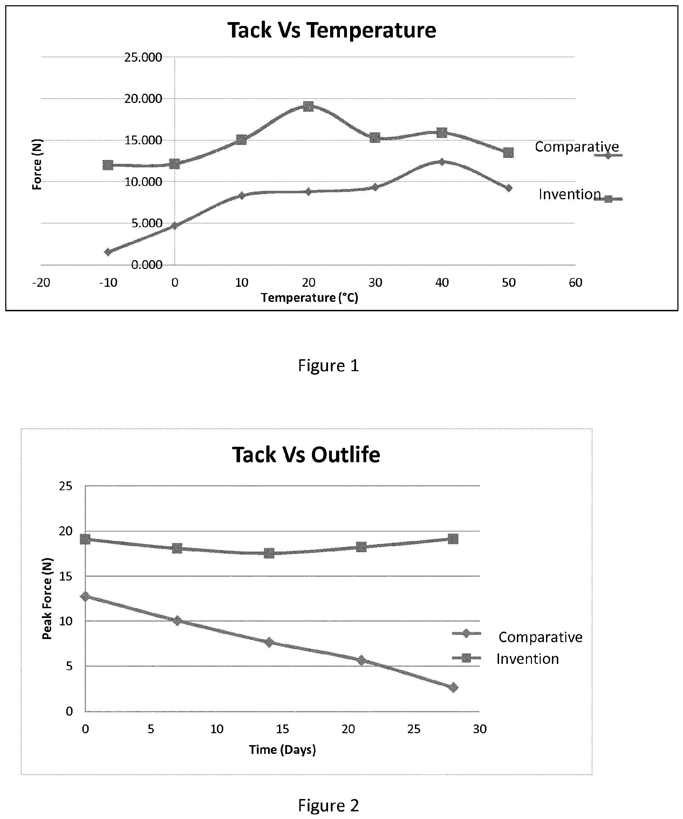

Finally Figures 1 and 2 show the effect of the tack material of the invention on the surface tack of a prepreg material in relation to the temperature (Figure 1) and the out life (Figure 2). The prepreg tack properties are represented by the diamond symbols. The prepreg comprises a fibrous reinforcement material and a resin material.

The modified prepreg contains the tack material of the invention (square symbols) which consists of tack material A. As is evident from these Figures, the tack for the modified prepreg is increased over a wide temperature range and also, the outlife tack is increased for the modified prepreg.

## Claims

1. A structure or laminate comprising a fibrous reinforcement material and a reinforcement resin material wherein the structure or laminate further comprises a tack material on an outer face, the tack material increasing the surface tack of the structure or laminate over a tack temperature range of from -10°C to 10°C in comparison to the original surface tack of the structure or laminate in the absence of the tack material over the same tack temperature range; and further wherein the tack material comprises a porous sheet material at least partially impregnated with a polymer material having a glass transition temperature of less than 0°C.

2. A structure or laminate according to claim 1, wherein the surface tack remains within 25% of the original surface tack following aging of the structure or laminate over a period of from 5 to 30 days.

3. A structure or laminate according to any of the preceding claims, wherein the increased tack is present over temperatures ranging from -10 to 30°C, preferably from -10 to 50 °C.

4. A structure or laminate according to any of the preceding claims, wherein the reinforcement resin material and the tack material are phase separated during processing.

5. Use of a tack material to increase the surface tack of a structure or laminate comprising
a) providing a structure or laminate comprising a fibrous reinforcement material and a reinforcement resin material,
b) selecting a tack material, and applying said tack material to the structure or laminate to increase the surface tack of the structure or laminate over a wider tack temperature range than the tack temperature range of the structure or laminate in the absence of the tack material; wherein the tack material comprises a porous sheet material at least partially impregnated with a polymer material having a glass transition temperature of less than 0°C.

6. A tack sheet or tack material for increasing the surface tack of a structure or laminate over a wider tack temperature range than the tack temperature range of the structure or laminate in the absence of the tack material, wherein the tack material or tack sheet comprises a porous sheet material at least partially impregnated with a polymer material having a glass transition temperature of less than 0°C.

7. A tack sheet or tack material according to claim 6, wherein the porous sheet has a degree of openness of from 10 to 90%, preferably from 30 to 80%.

8. A tack sheet or tack material according to any one of claims 6 or 7, wherein the porous sheet comprises a polymeric material.

9. A tack sheet or tack material according to any one of claims 6 to 8, wherein the porous sheet in unimpregnated form has a weight per unit area of from 1 to 50 g/m² (gsm), preferably from 2 to 30 gsm, more preferably from 3 to 15 gsm, most preferably from 4 to 10 gsm.

10. A tack sheet or tack material according to any one of claims 6 to 9 wherein the polymer material has a glass transition temperature of less than -20°C, preferably less than -40°C.

11. A tack sheet or tack material according to any one of claims 6 to 10 wherein the polymer material is present in a quantity of from 1 to 50 g/m² (gsm), preferably from 2 to 30 gsm, more preferably from 3 to 15 gsm, most preferably from 4 to 10 gsm.

12. A tack sheet or tack material according to any of claims 6 to 11, wherein one side of the tack sheet or tack material comprises polymer material whereas the other side remains dry and non-tacky.

13. A tack sheet or tack material according to any of claims 6 to 12, wherein the polymer material comprises uncured natural or synthetic rubber

14. Use of a tack sheet or tack material according to any of claims 6 to 13 to increase the surface tack of a prepreg comprising a structural layer of fibres and a thermosetting curable resin.

## Patentansprüche

1. Struktur oder Schichtstoff umfassend: ein Verstärkungsfasermaterial und ein Verstärkungsharzmaterial, wobei die Struktur oder der Schichtstoff ferner ein Haftklebematerial auf einer Außenfläche umfasst, wobei das Haftklebematerial die Oberflächenklebrigkeit der Struktur oder des Schichtstoffs über einen Klebetemperaturbereich von -10 °C bis 10 °C im Vergleich zur ursprünglichen Oberflächenklebrigkeit der Struktur oder des Schichtstoffes bei Nichtvorhandensein des Haftklebematerials über den gleichen Temperaturbereich erhöht; und wobei ferner das Haftklebematerial ein poröses Flächenmaterial umfasst, das zumindest teilweise mit einem Polymermaterial imprägniert ist, welches eine Glasübergangstemperatur von unter 0 °C aufweist.

2. Struktur oder Schichtstoff nach Anspruch 1, wobei die Oberflächenklebrigkeit, nach Alterung der Struktur oder des Schichtstoffs über einen Zeitraum von 5 bis 30 Tagen, innerhalb von 25 % der ursprünglichen Oberflächenklebrigkeit bleibt.

3. Struktur oder Schichtstoff nach einem der vorhergehenden Ansprüche, wobei die erhöhte Klebrigkeit über Temperaturen im Bereich von -10 bis 30 °C, bevorzugt von -10 bis 50 °C, vorhanden ist.

4. Struktur oder Schichtstoff nach einem der vorhergehenden Ansprüche, wobei das Verstärkungsharzmaterial und das Haftklebematerial während der Verarbeitung phasengetrennt sind.

5. Verwendung eines Haftklebematerials zur Erhöhung der Oberflächenklebrigkeit einer Struktur oder eines Schichtstoffes, umfassend:
a) Bereitstellen einer Struktur oder eines Schichtstoffs, die bzw. der ein Verstärkungsfasermaterial und ein Verstärkungsharzmaterial umfasst,
b) Auswählen eines Haftklebematerials und Auftragen des Haftklebematerials auf die Struktur oder den Schichtstoff zur Erhöhung der Oberflächenklebrigkeit der Struktur oder des Schichtstoffs über einen Klebetemperaturbereich, der größer ist als der Klebetemperaturbereich der Struktur oder des Schichtstoffs bei Nichtvorhandensein des Haftklebematerials; wobei das Haftklebematerial ein poröses Flächenmaterial umfasst, das zumindest teilweise mit einem Polymermaterial imprägniert ist, welches eine Glasübergangstemperatur von unter 0 °C aufweist.

6. Haftklebebahn oder Haftklebematerial zur Erhöhung der Oberflächenklebrigkeit einer Struktur oder eines Schichtstoffs über einen Klebetemperaturbereich, der größer ist als der Klebetemperaturbereich der Struktur oder des Schichtstoffs bei Nichtvorhandensein des Klebematerials; wobei die Haftklebebahn oder das Haftklebematerial ein poröses Flächenmaterial umfasst, das zumindest teilweise mit einem Polymermaterial imprägniert ist, welches eine Glasübergangstemperatur von unter 0 °C aufweist.

7. Haftklebebahn oder Haftklebematerial nach Anspruch 6, wobei die poröse Flächenbahn einen Offenheitsgrad von 10 bis 90 %, bevorzugt von 30 bis 80 % aufweist.

8. Haftklebebahn oder Haftklebematerial nach einem der Ansprüche 6 oder 7, wobei die poröse Flächenbahn ein Polymermaterial umfasst.

9. Haftklebebahn oder Haftklebematerial nach einem der Ansprüche 6 bis 8, wobei die poröse Flächenbahn in unimprägnierter Form eine Masse pro Flächeneinheit von 1 bis 50 g/m², bevorzugt von 2 bis 30 g/m², bevorzugter von 3 bis 15 g/m², höchstbevorzugt von 4 bis 10 g/m² aufweist.

10. Haftklebebahn oder Haftklebematerial nach einem der Ansprüche 6 bis 9, wobei das Polymermaterial eine Glasübergangstemperatur von unter -20 °C, bevorzugt unter -40 °C, aufweist.

11. Haftklebebahn oder Haftklebematerial nach einem der Ansprüche 6 bis 10, wobei das Polymermaterial in einer Menge von 1 bis 50 g/m², bevorzugt 2 bis 30 g/m², bevorzugter 3 bis 15 g/m², höchstbevorzugt 4 bis 10 g/m² vorhanden ist.

12. Haftklebebahn oder Haftklebematerial nach einem der Ansprüche 6 bis 11, wobei die eine Seite der Haftklebebahn bzw. des Haftklebematerials ein Polymermaterial umfasst, während die andere Seite trocken und nichtklebrig bleibt.

13. Haftklebebahn oder Haftklebematerial nach einem der Ansprüche 6 bis 12, wobei das Polymermaterial ungehärteten Naturkautschuk oder Synthesekautschuk umfasst.

14. Verwendung einer Haftklebebahn oder eines Haftklebematerials nach einem der Ansprüche 6 bis 13 zur Erhöhung der Oberflächenklebrigkeit eines Prepregs, das eine Faserstrukturschicht und ein duroplastisches härtbares Harz umfasst.

## Revendications

1. Structure ou stratifié comprenant un matériau de renforcement fibreux et un matériau de renforcement de type résine, la structure ou le stratifié comprenant en outre un matériau collant sur une face extérieure, le matériau collant augmentant l'adhésivité de surface de la structure ou du stratifié dans une plage de températures d'adhésivité de -10 °C à 10 °C comparativement à l'adhésivité de surface d'origine de la structure ou du stratifié en l'absence du matériau collant dans la même plage de températures d'adhésivité ; et le matériau collant comprenant en outre un matériau sous forme de feuille poreuse au moins partiellement imprégnée d'un matériau polymère ayant une température de transition vitreuse inférieure à 0 °C.

2. Structure ou stratifié selon la revendication 1, dans laquelle ou dans lequel l'adhésivité de surface reste dans une limite de 25 % de l'adhésivité de surface d'origine après un vieillissement de la structure ou du stratifié sur une période de 5 à 30 jours.

3. Structure ou stratifié selon l'une quelconque des revendications précédentes, dans laquelle ou dans lequel l'adhésivité augmentée est présente à des températures de -10 à 30 °C, préférablement de -10 à 50 °C.

4. Structure ou stratifié selon l'une quelconque des revendications précédentes, dans laquelle ou dans lequel le matériau de renforcement de type résine et le matériau collant sont séparés par séparation de phases durant la transformation.

5. Utilisation d'un matériau collant pour augmenter l'adhésivité de surface d'une structure ou d'un stratifié, comprenant :
a) la fourniture d'une structure ou d'un stratifié comprenant un matériau de renforcement fibreux et un matériau de renforcement de type résine,
b) la sélection d'un matériau collant, et l'application dudit matériau collant sur la structure ou sur le stratifié pour augmenter l'adhésivité de surface de la structure ou du stratifié dans une plage de températures d'adhésivité plus large que la plage de températures d'adhésivité de la structure ou du stratifié en l'absence de matériau collant ; le matériau collant comprenant un matériau sous forme de feuille poreuse au moins partiellement imprégnée d'un matériau polymère ayant une température de transition vitreuse inférieure à 0 °C.

6. Feuille collante ou matériau collant servant à augmenter l'adhésivité de surface d'une structure ou d'un stratifié dans une plage de températures d'adhésivité plus large que la plage de températures d'adhésivité de la structure ou du stratifié en l'absence du matériau collant, le matériau collant ou la feuille collante comprenant un matériau sous forme de feuille poreuse au moins partiellement imprégnée d'un matériau polymère ayant une température de transition vitreuse inférieure à 0 °C.

7. Feuille collante ou matériau collant selon la revendication 6, dans laquelle ou dans lequel la feuille poreuse a un degré d'ouverture de 10 à 90 %, préférablement de 30 à 80 %.

8. Feuille collante ou matériau collant selon l'une quelconque des revendications 6 ou 7, dans laquelle ou dans lequel la feuille poreuse comprend un matériau polymère.

9. Feuille collante ou matériau collant selon l'une quelconque des revendications 6 à 8, dans laquelle ou dans lequel la feuille poreuse sous une forme non imprégnée a un poids par unité de surface de 1 à 50 g/m², préférablement de 2 à 30 g/m², plus préférablement de 3 à 15 g/m², idéalement de 4 à 10 g/m².

10. Feuille collante ou matériau collant selon l'une quelconque des revendications 6 à 9, dans laquelle ou dans lequel le matériau polymère a une température de transition vitreuse inférieure à -20 °C, préférablement inférieure à -40 °C.

11. Feuille collante ou matériau collant selon l'une quelconque des revendications 6 à 10, dans laquelle ou dans lequel le matériau polymère est présent dans une quantité de 1 à 50 g/m², préférablement de 2 à 30 g/m², plus préférablement de 3 à 15 g/m², idéalement de 4 à 10 g/m².

12. Feuille collante ou matériau collant selon l'une quelconque des revendications 6 à 11, un côté de la feuille collante ou du matériau collant comprenant le matériau polymère, tandis que l'autre côté reste sec et non collant.

13. Feuille collante ou matériau collant selon l'une quelconque des revendications 6 à 12, dans laquelle ou dans lequel le matériau polymère comprend un caoutchouc naturel ou synthétique non durci.

14. Utilisation d'une feuille collante ou d'un matériau collant selon l'une quelconque des revendications 6 à 13 pour augmenter l'adhésivité de surface d'un matériau préimprégné comprenant une couche structurale de fibres et une résine thermodurcissable.
